(19) Europäisches Patentamt
European Patent Office
Office européen des brevets

(11) **EP 3 978 431 A1**

(12) **EUROPEAN PATENT APPLICATION**

(43) Date of publication:
**06.04.2022 Bulletin 2022/14**

(21) Application number: **20199904.2**

(22) Date of filing: **02.10.2020**

(51) International Patent Classification (IPC):
***C01B 32/19*** (2017.01)    ***C01B 32/194*** (2017.01)
***H01M 10/052*** (2010.01)

(52) Cooperative Patent Classification (CPC):
**C01B 32/19; C01B 32/194; H01M 10/052**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Univerzita Palackeho v Olomouci**
**77147 Olomouc (CZ)**

(72) Inventors:
• **Tantis, Iosif**
  **77900 Olomouc (CZ)**

• **Bakandritsos, Aristeidis**
  **77900 Olomouc (CZ)**
• **Zboril, Radek**
  **77900 Olomouc (CZ)**
• **Otyepka, Michal**
  **77900 Olomouc (CZ)**

(74) Representative: **Hartvichova, Katerina**
  **HARBER IP s.r.o.**
  **Dukelskych hrdinu 567/52**
  **170 00 Praha 7 (CZ)**

(54) **SULFUR-FUNCTIONALIZED GRAPHENE, AND USE THEREOF AS LI-S BATTERY CATHODE**

(57)    The present invention provides a method for preparation of sulfur functionalized graphene which contains the following steps:
a) providing a dispersion of fluorinated graphite;
b) subjecting the dispersion of fluorinated graphite to sonication and/or mechanical treatment and/or thermal treatment;
c) preparing a metal polysulfide, starting from a metal sulfide and sulfur;
d) contacting the product from step b) with the product of step c) at a temperature within the range of 10-110°C;
e) separating the solid product formed in step d) from the solution.

Further provided are sulfur functionalized graphene with high sulfur loading obtained by this method, and its use in electrical cells.

## Description

<u>Field of Art</u>

The present invention relates to a novel method of preparing sulfur functionalized graphene, which produced graphene with high sulfur loading and low residual fluorine content. The resulting material allows forming electrodes for lithium-sulfur batteries with a high specific capacity and high cycling stability.

<u>Background Art</u>

Lithium-ion batteries (LIBs) are a rechargeable energy storage system that has dominated the electronics market as a power source for portable and larger devices since early 1990s. However, with the rapid increase of portable devices and electric vehicles employed in personal, occupational and military applications, the demand for batteries with higher performance and lower cost also increases. Thus, considerable research efforts have been devoted to the development of advanced electrical energy storage devices that can offer high energy density. Lithium-sulfur batteries (LSBs) could offer a very promising energy storage system alternative because of their high theoretical specific capacity (1672 mAhg$^{-1}$) and specific energy (2600 Wh kg$^{-1}$). Moreover, sulfur is environmentally friendly, naturally abundant and a key byproduct of the petroleum industry rendering it attractive for its valorization and commercialization in high-tech areas such as the portable energy storage. However, several bottlenecks hinder the practical development of the LSBs, such as sulfur's poor conductivity and large volume changes upon charge/discharge, which restrict the efficient and long-life operation. More importantly, the "shuttle effect" of the soluble lithium polysulfides ($Li_2S_n$, n≥4) -formed as byproducts during the charge/discharge process- lead to low coulombic efficiency, low sulfur utilization and fast capacity-fade.

Different strategies have emerged to tackle the above-mentioned problems, such as the fabrication of cathodes, using materials acting as hosts for sulfur -to make it more stable-, or functional separators, which hinder the shuttling of lithium polysulfides. The design of composite cathodes in order to achieve high sulfur loading, utilization and stability is the first key step for leveraging the hallmarks of LSBs. In this regard, nanostructured carbon-based materials are usually used, because they exhibit high porosity for hosting sulfur, good electrical conductivity, large surface areas and excellent mechanical properties. In a pioneering work (X. L. Ji et al. Nat. Mater. 2009, 8, 500-506), an ordered mesoporous carbon for sulfur encapsulation was exploited in order to improve the utilization of sulfur and restrain the "shuttle effect". However, such conventional porous carbon hosts result into poor cycling stability because of the weak interaction between the polar polysulfides and the non-polar carbon, highlighting the need for different carbon chemistries and composites, such as designer carbons with tailor-made chemical groups on their surface. Such functional groups should anchor the polysulfides effectively, limiting the "shuttle effect" during charge/discharge process for stable cycling. In addition, replacing porous carbons for the physical entrapment of sulfur, appropriately functionalized graphene could be used as a building block for the controlled assembly of highly stable/highly sulfur-loaded cathodes, which would additionally offer better electrical conductivity. Another approach to block the "shuttle effect" is the replacement of elemental sulfur with short-chain polysulfides, covalently bound to the surface of a carbon, and preferably on graphene for higher conductivity -thus mitigating to some extent the insulating nature of sulfur.

In order to achieve this, we considered fluorinated graphite and its few-layered fluorographene analogue (from now on termed simply fluorographene), which is a starting material for the preparation of several covalently functionalized few-layered graphene derivatives (from now on termed simply graphene derivatives), due to the electrophilicity of the carbon atoms (actually of the carbon radical defects) and thus their high reactivity with many nucleophiles, even under mild conditions. A previous work (V. Urbanová et al. Adv. Mater. 2015, 27, 2305-2310) showed the first example of the covalent functionalization of fluorographene with thiol/sulfhydryl groups (-SH), by simple nucleophilic substitution of fluorine atoms in a polar solvent. Nevertheless, sulfur in the -SH groups is not proper for battery cathode materials since it is already in a reduced state. Another issue in that graphene-SH derivative, was that carbon atoms were bonded to only one S atom, leading to very small S content (5 at. %, as reported).

<u>Disclosure of the Invention</u>

The present invention provides a method for preparation of sulfur-functionalized graphene which contains the following steps:

a) providing a dispersion of fluorinated graphite;
b) subjecting the dispersion of fluorinated graphite to sonication and/or mechanical treatment and/or thermal treatment;
c) preparing a metal polysulfide, starting from a metal sulfide and sulfur;

d) contacting the product from step b) with the product of step c) at a temperature within the range of 10-110 °C;
e) separating the solid product formed in step d) from the solution.

The term "fluorinated graphite" includes fluorographite, graphite fluoride, fluorinated graphite, and exfoliated forms of these materials. Fluorinated graphites are also available under the name poly(carbon monofluoride), carbon monofluoride or poly(carbon fluoride). The initial content of fluorine in the starting fluorinated graphite is typically at least 40 at. %, more preferably at least 45 or at least 50 at. %, relative to the total atoms present in the sample and determined by X-ray photoelectron spectroscopy (XPS) using an Al-K$\alpha$ source.

The term "sulfur-functionalized graphene" means graphene with S atoms and polysulfide chains covalently bonded on the graphene surface. This term encompasses single-layer graphene, as well as materials comprising single-layer graphene in a mixture with moieties (e.g., flakes) or particles containing a plurality of graphene layers. This term also covers graphene wherein a small amount of fluorine is present as well (max. around 10 at. %).

The dispersion prepared in step a) is a dispersion of fluorinated graphite in a solvent. The solvent is preferably an aprotic polar solvent. The solvent may preferably be selected from dimethylformamide (DMF), dimethylsulfoxide (DMSO), N-methyl-2-pyrrolidone (NMP), glycols such as ethylene glycol, and mixtures thereof. Less polar or non-polar solvents such as acetonitrile, benzene, toluene or chlorobenzene may be used in combination with a polar organic solvent (for example DMF, NMP, dimethyl sulfoxide, dimethylacetamide).

The invention also encompasses embodiments in which a different solvent is used for sonication and/or mechanical treatment and/or thermal treatment than the solvent used for the reaction with the metal polysulfide reagent.

The step of sonication and/or mechanical treatment and/or thermal treatment yields a mixture containing fluorinated graphene and exfoliated fluorinated graphite particles.

Sonication is typically carried out at a frequency range of 20 kHz to 100 kHz and for a period of at least 2 hours, more preferably of at least 3 hours, even more preferably at least 4 hours.

The thermal treatment of the sonicated graphite fluoride with the metal polysulfide (step d) is typically carried out at the temperature range of 10-110 °C in an inert atmosphere and for a period of at least 1 hour or preferably at least 6 hours, more preferably at least 24 hours, even more preferably 72 hours.

The mechanical treatment preferably includes at least one treatment selected from high-shear mixing, stirring, vigorous stirring, stirring with magnetic bar, stirring with a mechanical stirrer. The mechanical treatment is most typically carried out by high-shear mixing or magnetic bar stirring.

The preferred treatment in step b) is sonication and/or mechanical treatment. Particularly preferred is mechanical treatment (in particular stirring) followed by sonication.

The metal in the polysulfide and sulfide in step c) is preferably an alkali metal or an alkaline earth metal. More preferably, the metal is selected from sodium, potassium and magnesium; most preferably, the metal is sodium.

The metal polysulfide is preferably added to the reaction mixture in step d) as a powder.

After contacting the product of step b) containing exfoliated fluorinated graphite / fluorinated graphene with the metal polysulfide reagent, the mixture is typically subjected to heating to a temperature within the range of 10-110 °C, more preferably 20-100 °C, even more preferably 50-90 °C. The heating is preferably carried out for at least 4 hours, preferably for 4 hours to 20 days, even more preferably for at least 8 hours, yet more preferably for at least 24 hours, and even more preferably for at least 2 days (48 hours) or for at least 3 days (72 hours). The longer is the period of heating, the higher is the sulfur functionalization degree.

The weight ratio (mass ratio) of the starting fluorinated graphite to the metal polysulfide is preferably in the range of 1:2 to 1:20, more preferably 1:2 to 1:10. The optimum weight ratio is about 1:8 for sodium polysulfide.

The step of separation of the product (sulfur functionalized graphene) may be performed by known techniques such as centrifugation, sedimentation or filtration.

The solvent used in the process is preferably a polar solvent. The solvent may preferably be selected from dimethylformamide (DMF), dimethylsulfoxide (DMSO), N-methyl-2-pyrrolidone (NMP), N,N-dimethylacetamide (DMA), glycols such as ethylene glycol, and mixtures thereof.

The method of the invention allows to prepare graphene containing sulfur in the form of polysulfides and sulfur (S) atoms, sodium (as counter-ions of the terminal S atoms of the polysulfide chains) and fluorine atoms. The final sulfur-functionalized graphene usually contains residual fluorine atoms, but the method allows to reliably achieve a higher sulfur mass loading than most methods known in the prior art; the achieved sulfur loading is about 80 wt. % when the reaction of step d) is performed for 48 hours using a mass ratio of sodium polysulfide:fluorographene 8:1 in 80 °C, at least 74 wt.% in 50 °C and at least 70 wt.% in room temperature. The process allowing to achieve these properties is simple and effective and uses economically effective starting compounds.

In particular, the method of the invention is the only wet-process chemical method which can achieve such high sulfur loading, covalently bonded to carbon atoms of graphene, which were previously bonded to fluorine atoms. Additionally, it is the only method achieving a high sulfur loading at relatively low reaction temperature.

The use of metal polysulfide instead of elemental sulfur offers the advantage of having the highly nucleophilic edges which react with the electrophilic carbon atoms of the sonicated fluorinated graphite, finally creating covalently bonded sulfur chains on the graphene surface. This procedure leads to high sulfur loading and bonding, inhibiting the "shuttle effect", while the presence of graphene offers conductive paths for electron transfer in the battery cell.

The sulfur functionalized graphene has thus desirable features enabling its use as a high sulfur containing cathode without the drawbacks for materials known in the art. In particular, its high sulfur loading which is combined with the covalent bonding of sulfur on the graphene's surface, leads to a high specific capacity and high cycling stability, which is comparable or higher than previous sulfur-containing graphene-based LSB materials, according to the prior art. The highest achieved value of specific capacity as described in the Example 7 was 912 mAh g$^{-1}$.

The sulfur functionalized graphene which is obtained by the method of the present invention contains covalently bondedsulfur and has a sulfur loading of at least 60 wt. %, preferably of at least 70 wt. %. The sulfur loading is determined by thermogravimetric analysis by measuring the weight loss in the temperature range of 200-350 °C. The sulfur functionalized graphene further contains residual fluorine and sodium.

In other words, the sulfur functionalized graphene contains covalently bonded sulfur in a proportion of at least 12 at. %, and residual fluorine and sodium which are optionally in a proportion of up to 10 at. %. The at. % are determined relative to the total atoms present in the sample and are determined by X-ray photoelectron spectroscopy (XPS) using an Al-K$\alpha$ source.

Preferably the sulfur functionalized graphene contains at least 18 at.% of sulfur, up to 8 at.% of fluorine and up to 9 at. % of sodium, relative to the total atoms present in the sample and determined by X-ray photoelectron spectroscopy (XPS) using an Al-K$\alpha$ source.

The content of sulfur in the sulfur-functionalized graphene with the present method of production could peak approximately around 18.4 at. %, relative to the total atoms present in the sample and determined by X-ray photoelectron spectroscopy (XPS) using an Al-K$\alpha$ source. This sulfur content corresponds to a mass content of 80 wt%, according to thermogravimetric analysis, as described in Example 2.

Another aspect of the present invention is the use of the sulfur functionalized graphene described above as a LSB cathode material. The sulfur functionalized graphene of the present invention possesses a high specific capacity, a very high retention of the capacity upon cycling at both low and high current rates.

The invention also provides an electrical cell comprising at least two electrodes, a separator and an electrolyte, wherein one electrode contains or consists of the sulfur functionalized graphene described above.

The electrolyte can be a liquid electrolyte containing a lithium salt.

The electrical cell may contain at least two electrodes, wherein at least one electrode is made of the sulfur functionalized graphene of the present invention applied on a current collector (such as a carbon coated aluminium foil), at least one separator membrane provided between the electrodes, the separator membrane(s) being soaked by an electrolyte, and a lithium foil anode.

In a particular embodiment, a two-electrode system using a lithium foil as anode was used to evaluate the performance, rate capability and cyclic stability of the sulfur functionalized graphene obtained from step (e). The sulfur functionalized graphene was homogeneously dispersed in *N*-methyl-2-pyrrolidone (NMP) adding poly-vinyl fluoride (PVDF) and carbon black (Ketjen black), preferably at a mass ratio of 90:5:5, and sonicated, preferably for 6 hours, to form a homogenous paste. Moreover, during sonication every 2 hours the slurry was mixed in a planetary mixer to better distribute the components. The slurry was pasted on an aluminum foil via doctor blading (180 $\mu$m blade height). Next, the film was dried at 80 °C in a vacuum oven overnight, and then two electrodes were cut into 18mm discs. Afterwards, the mass of the electrodes were measured and dried again at 80 °C under vacuum (40 mbar), preferably for 8 hours in a vacuum oven. The electrodes were transferred (under vacuum) to an Ar filled glovebox. The cathode electrode and the lithium foil were placed face-to-face with a separator membrane in between. The separator membrane was soaked with the selected electrolyte. The electrodes were enclosed in an air-tight packaging and the current collectors were connected with the testing equipment (the battery tester). Before actual testing of the battery cell, conditioning was performed by resting the electrodes until reaching the open-circuit voltage (E$_{oc}$) equilibrium (around 6 hours) and then charging the cell at voltages lower than the final voltage used, and at lower specific currents.

Brief description of Drawings

FIG. 1. S2p X-ray photoelectron spectra of the product of Example 1.
FIG. 2. X-ray photoelectron spectra of the starting material and the product of Example 2.
FIG. 3. C1s X-ray photoelectron spectra of the product of Example 2.
FIG. 4. Thermogravimetric analysis of the solid product from the reaction of Example 2. The analysis was performed in N$_2$ atmosphere, up to 800 °C at 5 °C min$^{-1}$.
FIG. 5. Infra-red spectra of (a) the starting fluorinated graphite and (b) the product from Example 2.

**FIG. 6.** Thermogravimetric analysis of the solid product from the reaction of Example 3. The analysis was performed in $N_2$ atmosphere, up to 800 °C at 5 °C min$^{-1}$.

**FIG. 7.** Thermogravimetric analysis of the solid product from the reaction of Example 4. The analysis was performed in $N_2$ atmosphere, up to 800 °C at 5 °C min$^{-1}$.

**FIG. 8.** Thermogravimetric analysis of the solid product from the reaction of Example 5. The analysis was performed in $N_2$ atmosphere, up to 800 °C at 5 °C min$^{-1}$.

**FIG. 9.** Thermogravimetric analysis of the solid product from the reaction of Example 6. The analysis was performed in $N_2$ atmosphere, up to 800 °C at 5 °C min$^{-1}$.

**FIG. 10.** Scanning electron microscopy (SEM) images of the film of the electrode material (prepared as described in Example 7, pasted on the aluminium foil

**FIG. 11.** Electrochemical characterization of the product from Example 2. **a)** Cyclic voltammetry curves in 1M LiTFSI in 1:1 DOL:TTE at different scan rates; **b)** galvanostatic charge-discharge profiles at 0.1 C (0.17 A g$^{-1}$)

**FIG. 12.** Rate capability testing of the product from Example 2 in 1M LiTFSI in 1:1 DOL:TTE at various C-rates (specific currents).

**FIG. 13.** Specific capacity and coulombic efficiency of the product from Example 2 in 1M LiTFSI in 1:1 DOL:TTE at **(a)** 0.1 C (0.17 A g$^{-1}$), **(b)** 0.2 C (0.33 A g$^{-1}$) and **(c)** 1 C (1.7 A g$^{-1}$)

**FIG. 14.** Scanning electron microscopy (SEM) images of the battery tested material film from Example 2 after testing for 250 charge/discharge cycles

**FIG. 15.** Specific capacity and coulombic efficiency of the product from Example 6 in 1M LiTFSI in 1:1 DOL:TTE

Examples of carrying out the Invention

**Materials and methods:**

Graphite fluoride (>61 wt% F), $Na_2S \cdot 9H_2O$, Sulfur and 1-Methyl-2-pyrrolidinone anhydrous, 99.5% were purchased from Sigma-Aldrich. Acetone (pure) and ethanol (absolute) were purchased from Penta, Czech Republic. All chemicals were used without further purification.

FT-IR spectra were measured on an iS5 FTIR spectrometer (Thermo Nicolet), using the KBr pellet accessory. Spectra were recorded by summing 50 scans, using pure KBr for the background acquisition. X-ray photoelectron spectroscopy (XPS) was performed on a PHI VersaProbe II (Physical Electronics) spectrometer, using an Al-K$\alpha$ source (15 kV, 50 W). MultiPak (Ulvac - PHI, Inc.) software package was used for deconvolution of obtained data.

The samples were also analyzed with scanning electron microscopy using Hitachi SU6600 instrument with accelerating voltage of 5 kV. For these analyses, an electrode or a small droplet of a material dispersion in ethanol (concentration approximately 0.1 mg ml$^{-1}$) was placed on a carbon-coated copper grid and left for drying.

Thermal analysis was performed with an STA449 C Jupiter Netzsch instrument.

Cyclic voltammetry (CV) and Galvanostatic Charge-Discharge with Potential Limitation (GCPL) were performed on a Bio-Logic battery tester (BCS-810) controlled with the BT-Lab software (version 1.64).

The following passage defines the battery metrics which are used in the present document, and generally accepted in the field. Specific capacity (C in mAh g$^{-1}$) of the electrode material is calculated from galvanostatic charge-discharge curves according to the equations:

$$C = \frac{I \cdot t}{m} \; [\text{mAh g}^{-1}]$$

The capacity was calculated with respect to the sulfur mass as it was measured through the TGA. The coulombic efficiency (CE %) for each cycle is calculated according to the equation:

$$CE = \frac{Discharge\ capacity}{Charge\ capacity} \text{x} 100\%$$

The C-rate is calculated from the sulfur theoretical capacity (1672 mAh g$^{-1}$), meaning that at 1 C (0.17 A g$^{-1}$) a fully charged battery rated at 1 Ah should provide 1 A for one hour with respect to the sulfur mass. The current densities are calculated with respect to the sulfur mass and given in A g$^{-1}$.

**Example 1: Synthesis of Sodium Polysulfide (3 h reaction)**

In a glass spherical flask, 4.8 g of sodium sulfide nonahydrate ($Na_2S·9H_2O$) was dissolved in 20 ml water-ethanol mixed solvent (1:1 volume ratio) and 0.64 g of sulfur (S) was added subsequently. The solution was stirred with a teflon coated magnetic bar for 3 hours at 30 °C and turned from yellow to dark orange indicating the gradually increasing chain length of the polysulfides. The solvent was vacuum dried in a rotary evaporator (30 °C) and the residue was milled in a mortar to create a fine powder.

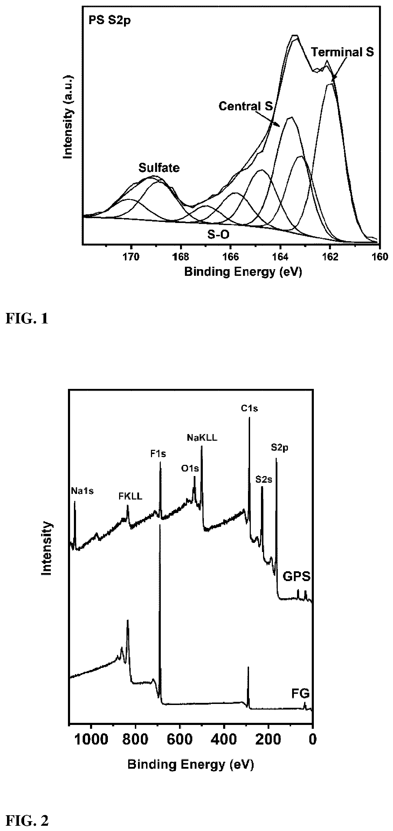

X-ray photoelectron spectroscopy on the product of Example 1 (Fig. 1) showed that the reaction of $Na_2S$ with S resulted in sodium polysulfide by displaying four doublets each one demonstrating different chemical state of sulfur. The first at 162 eV corresponds to the $S2p_{3/2}$ of the terminal S, while the doublet at 163.5 eV is ascribed to the central sulfur.

**Example 2: Synthesis of sulfur functionalized graphene (at 80 °C, 1:8 mass ratio)**

To prepare the sulfur functionalized graphene (GPS), firstly 250 mg of graphite fluoride was dispersed in 15 ml of NMP using a 50 ml glass spherical flask. The flask was covered and left stirring for 3 days. Then, it was sonicated for 4 hours to achieve better exfoliation. After the exfoliation, 2 g of the product from Example 1 was added and the mixture reacted at 80 °C in an oil bath under reflux for 48 h, in $N_2$ atmosphere, using magnetic stirring with teflon coated magnetic bar. After the end of the reaction, the mixture was left to cool down and transferred to 50 ml falcon centrifuge tubes. The solid particles (the product) were separated from the solvent and the by-products by centrifugation at 15000 rcf for ca. 10 minutes. The supernatant was discarded, and the tube was refilled with the next washing solvent. The sample was homogenized by shaking and sonication for at least 1 minute in order to redisperse the precipitate in the new solvent. Washing was performed with different solvents: NMP (3x), acetone (3x), ethanol (3x), and distilled water (3x), then refilled back with distilled water. Finally, the aqueous mixture was frozen at -80 °C and after 3 hours it was inserted in a freeze dryer (-108 °C, 0.4 mbar) for 2 days. The final product was a fine powder.

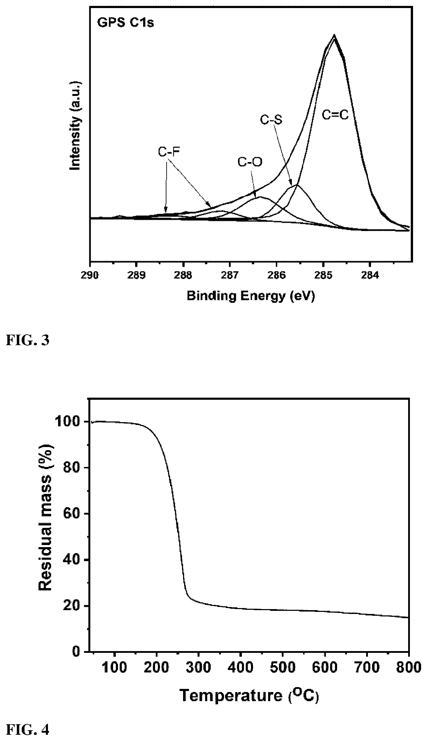

X-ray photoelectron spectroscopy on the starting Fluorographite (FG) and on the product of Example 2 (Fig. 2) shows the successful defluorination of GPS since the F1s peak is much lower than in FG and the S2p and Na1s peaks were emerged showing the insertion of sulfur and some remaining sodium from the polysulfide, probably at the one polysulfide edge, confirming the reaction between the PS and the FG. Moreover, in the deconvoluted C1s spectra of the GPS material a major peak at 284.8 eV corresponding to graphitic $sp^2$ bonds is shown, while another peak at 285.6 eV emerged (Fig. 3), corresponding to carbons covalently bonded to S. The atomic ratio of each component is shown at Table 1.

The actual sulfur content for each example was determined via thermogravimetric analysis (TGA) where the weight loss in the temperature range of 200-350 °C is due to the release and evaporation of sulfur (Fig. 4). The thermogram from GPS shows one-step loss between 200 to 350 °C and -20 wt% residual mass (~80 wt% sulfur loading).

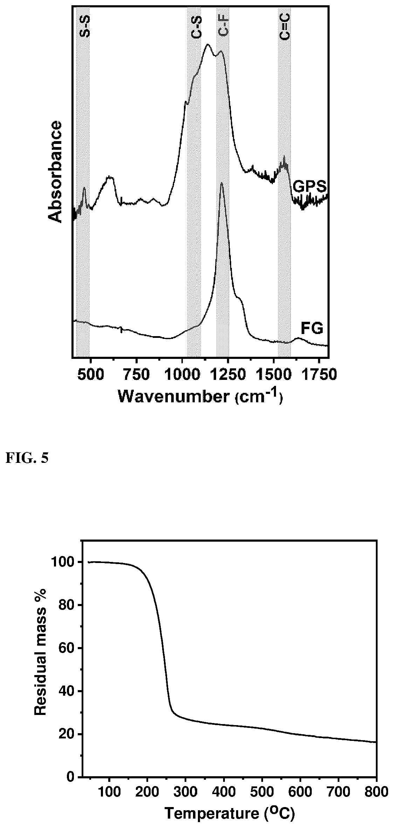

FT-IR analysis was performed to understand better the chemical structure of the materials. The defluorination of the starting FG after the reaction and isolation of the product (GPS) and the presence of C-S covalent bonds were verified. The C-F band (-1200 $cm^{-1}$) decreased and a new band at -1570 $cm^{-1}$ emerged indicating the successful defluorination and the formation of C=C bonds (aromatic ring stretching), respectively (Fig. 5). In addition to this, another peak emerged at -1060 $cm^{-1}$ attributed to covalent C-S covalent bonds (C-S stretching).

**Table 1.** Atomic contents as obtained from X-ray photoelectron spectroscopy analysis for the starting graphite fluoride and for the product of Example 2 (GPS 1:8).

| Atomic contents % | C | N | O | F | Na | S |
|---|---|---|---|---|---|---|
| FG | 48.4 | 0 | 1.1 | 50.5 | 0 | 0 |
| GPS 80 °C 1:8 | 55.4 | 1.1 | 8.9 | 7.5 | 8.7 | 18.4 |

**Example 3: Synthesis of sulfur functionalized graphene (at 50 °C)**

The same procedure as in Example 2 was followed, but instead of heating the mixture at 80 °C for 48 h, it was heated at 50 °C for 48 h.

Thermogravimetric analysis (TGA) was performed to verify the sulfur loading in this example (Fig. 6). The GPS thermogram shows one-step loss between 200 to 350 °C and -25 wt% residual mass (-75 wt% sulfur loading, which -based on XPS- could be approximately 16 at. %. It should be noted that XPS is a surface analysis technique).

**Example 4: Synthesis of sulfur functionalized graphene (room temperature)**

The same procedure as in Example 2 was followed, but instead of heating the mixture at 80 °C for 48 h, it was left at room temperature for 48 h.

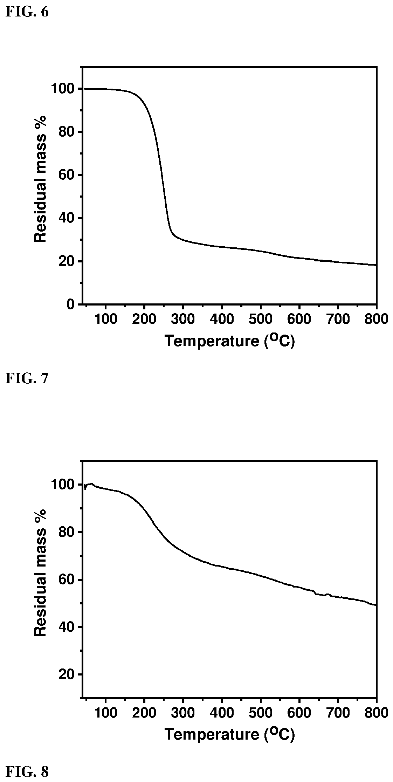

Thermogravimetric analysis (TGA) was performed to verify the sulfur loading in this example (Fig. 7). The GPS 50 °C thermogram shows one-step loss between 200 to 350 °C and -29 wt% residual mass (-71 wt% sulfur loading).

**Example 5: Synthesis of sulfur functionalized graphene with pre-heated graphite fluoride (comparative example).**

The same procedure as in Example 2 was followed, but FG was heat-treated for 48 h in absence of the product from Example 1 (the polysulfides). Firstly 250 mg of graphite fluoride was dispersed in 15 ml of NMP using a 50 ml glass spherical flask. The flask was covered and left stirring for 3 days. Then, it was sonicated for 4 hours to achieve better exfoliation. Then heating in NMP at 120 °C for 48 h took place without adding sodium polysulfide. The product of this reaction was significantly defluorinated and contained only 15 at.% of fluorine. After these 48 h of heating, the sodium polysulfide was added and the mixture was heated at 80 °C for 48 h. Thermogravimetric analysis (TGA) was performed to verify the sulfur loading in this example (Fig. 8). The GPS with preheated graphite fluoride thermogram shows one-step loss between 200 to 350 °C and -67 wt% residual mass (-33 wt% sulfur loading). The low sulfur content in the case is attributed to the defluorination of graphite fluoride during the first heat-treatment at 120 °C in absence of sodium polysulfide; when i.e. the carbon are not bonded to fluorine atoms they are not electrophilic and cannot react with the polysufide chains. This example showed clearly the important role of fluorines in fluorinated graphite for the covalent bonding of graphene's carbons with the polysulfides during the reaction (step (d) of the invention).

**Example 6: Synthesis of sulfur functionalized graphene (80 °C, 1:4 mass ratio)**

The same procedure as in Example 2 was followed, but instead of using 2 g of PS, 1 g was used in order to lower the FG/PS mass ratio in the reaction from 1:8 (Example 2) to 1:4.

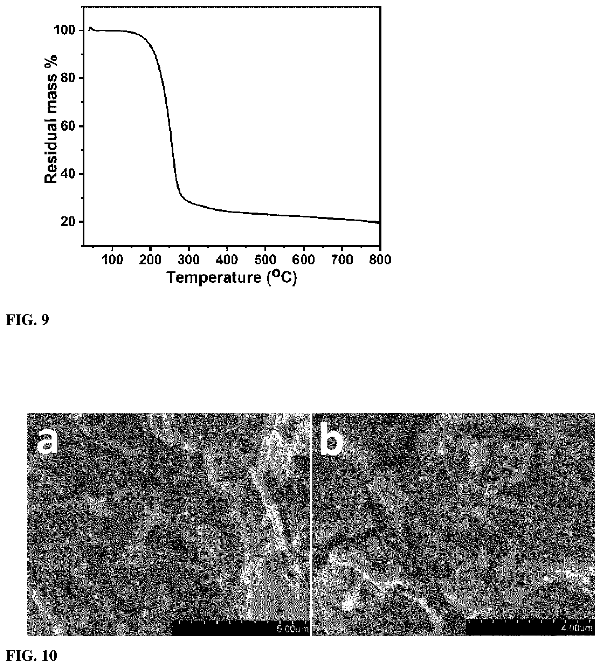

Thermogravimetric analysis (TGA) was performed to verify the sulfur loading in this example (Fig. 9). The GPS 80 °C 1:4 mass ratio thermogram shows one-step loss between 200 to 350 °C and -26 wt% residual mass (-74 wt% sulfur loading).

**Example 7: Electrochemical testing in Li-S full-cell using the product from Example 2 (80 °C, 1:8 mass ratio).**

The active material (sulfur functionalized graphene, GPS, from Example 2) was homogeneously dispersed in $N$-methyl-2-pyrrolidone (p.a. $\geq$ 99%, Sigma-Aldrich) with binder Polyvinylidene fluoride (PVDF, Sigma-Aldrich) and conductive carbon Ketjen black (AkzoNobel) at a ratio of 90:5:5 and sonicated for 6 hours, to form a homogenous paste. Moreover, during sonication every 2 hours the slurry was mixed in a planetary mixer (Thinky ARV-310LED) to better distribute the components. The slurry was pasted on a carbon-coated aluminium foil (Cambridge Energy Solutions, thickness 15 $\mu$m) with doctor's blade technique (Erichsen, Quadruple Film Applicator, Model 360).. Next, the film was dried at 80 °C in vacuum oven overnight, before electrodes with a diameter of 18 mm were cut. The obtained film was examined with scanning electron microscopy before testing, showing the sulfur particles covering the uniformly distributed graphene sheets while being attached on them (Fig. 10a,b). For assembly of the battery device, the GPS electrode was placed in a sleeve (El-Cell insulator sleeves equipped with Whatman® glass microfiber paper separator with thickness 0.26 mm). The separator membrane was soaked with ~100 $\mu$l of electrolyte. 1 M of LiTFSI (lithium bis-trifluoromethanesulfonimide, MTI) in a 1:1 mixture of DOL (Dioxolane, Aldrich) and TTE (1,1,2,2-Tetrafluoroethyl 2,2,3,3-Tetrafluoropropyl Ether, TCI) was used as electrolyte. All the solvents were dried with molecular sieves overnight before use. A lithium foil disc with 18 mm diameter was used as anode and both electrodes were enclosed inside the sleeve with stainless steel plungers, while the whole device was tightened and connected to the battery tester for analysis.

Before testing the device, conditioning of the electrode materials was performed as follows:
Rest the electrode until it reaches voltage equilibrium (usually ~6 hours) and hold of potential for 3 hours at 1.5 V.

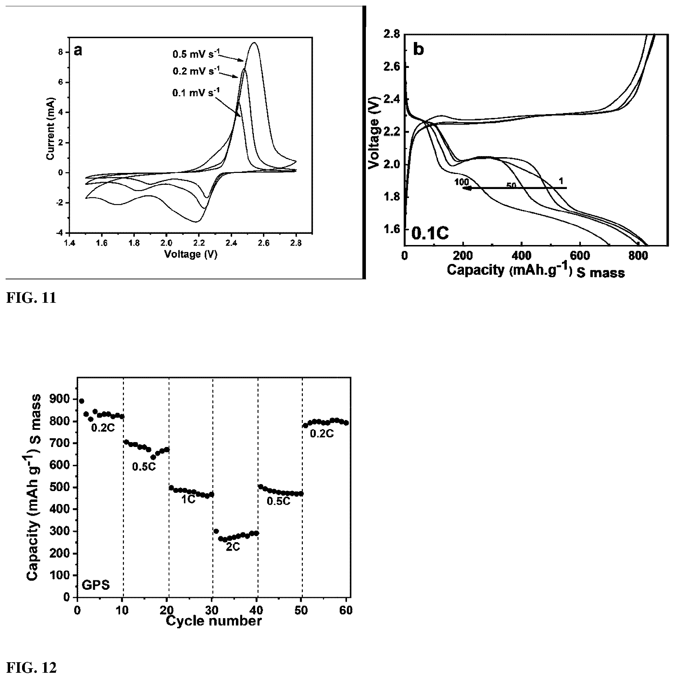

The above mentioned cells were tested via cyclic voltammetry (CV), and charge/discharge profiling. Firstly, the CV profiles were recorded in 0.1, 0.2 and 0.5 mV s$^{-1}$. In all cases, the anodic peak during charge is ascribed to the oxidation of the cathode which is completed in two stages, with the broad peak at -2.45 V representing the conversion of $Li_2S_{1-2}$ to $Li_2S_n$ (n>2) and the formation of elemental sulfur. The reduction is also completed in two clearly separated steps: The peak at 2.25 V is ascribed at the reduction of elemental sulfur to $LiS_n$ ($4 \leq n \leq 8$) while the peak at 1.8 V corresponds to the subsequent reduction of $LiS_n$ to $Li_2S_{1-2}$ (Fig. 11a). Figure 11b represents the electrochemical profiles of the galvanostatic charge/discharge for the sulfur functionalized graphene cathode. The shape of the curves is well maintained for more than 75 cycles at specific current of 0.1 C (0.17 A g$^{-1}$), while the capacity is practically stable indicating high electrochemical reversibility. The cathode shows good rate capability by obtaining capacities of 496 mAh

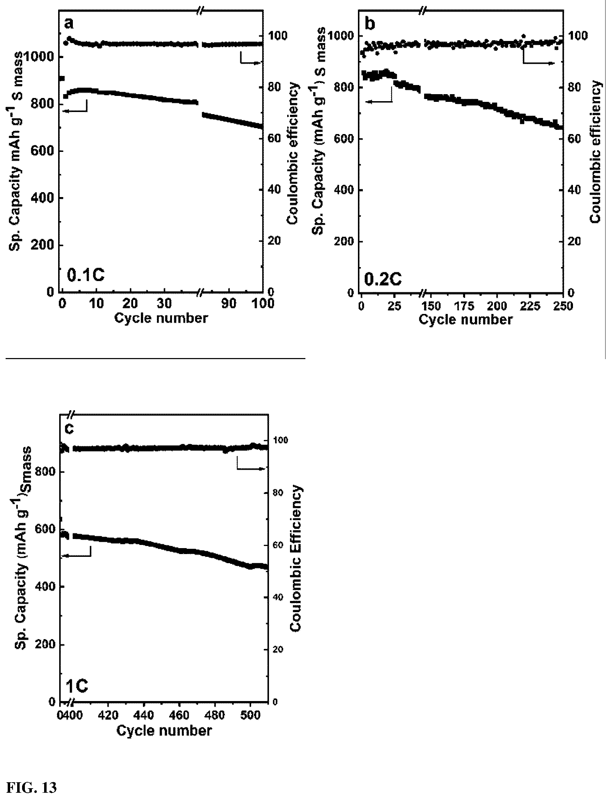

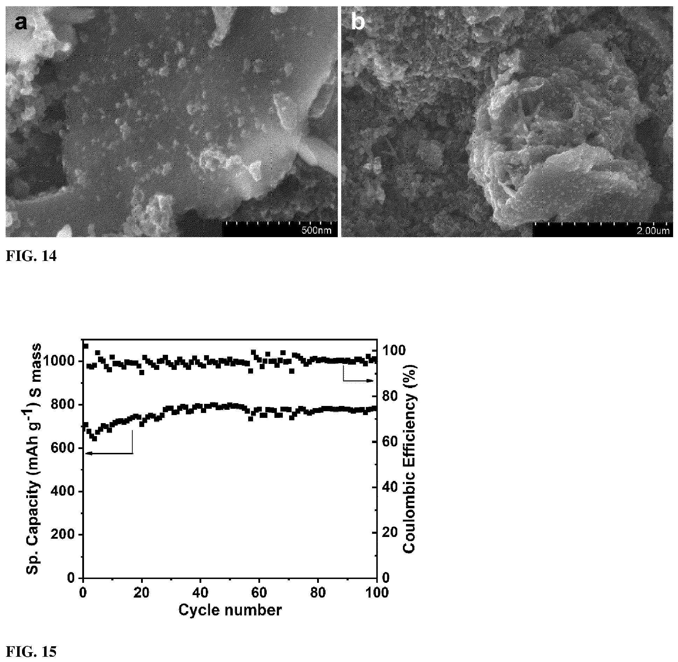

$g^{-1}$ at 1C (1.67 A $g^{-1}$) and 298 mAh $g^{-1}$ even at 2 C (3.3 A $g^{-1}$). Moreover, the cathode regains its initial capacity of -800 mAh $g^{-1}$ when the rate is back at 0.2 C (0.33 A $g^{-1}$) (Fig. 12). The stability testing of this material shows excellent results in both high and low specific currents. The initial capacity varied from 636 mAh $g^{-1}$ at 1 C to 912 mAh $g^{-1}$ at 0.1 C (0.17 A $g^{-1}$) and the cell maintained very high stability even in low rate showing 720 mAh $g^{-1}$ after 200 cycles in 0.2 C (0.33 A $g^{-1}$) and 706 mA $g^{-1}$ after 100 cycles in 0.1 C (Fig. 13). This value corresponds to 635 mAh $g^{-1}$ with respect to the active material (90%), and 508 mAh $g^{-1}$ with respect to the whole electrode mass (GPS, 80% sulfur) after 100 cycles at 0.1 C (0.17 A $g^{-1}$). The coulombic efficiency is kept at 96.8% for 100 cycles corresponding to very low material loss during cycling. The tested material was scratched from the film after testing and was examined after washing with scanning electron microscopy showing full preservation of the structure, attributed to the strong interaction between the graphene and sulfur even after 250 charge/discharge cycles (Fig. 14).

**Example 8: Electrochemical testing in Li-S full-cell using the product from Example 6 (80°C, 1:4 mass ratio).**

The same procedure as in Example 6 was followed, but instead of using the product of Example 2, the product of Example 6 was used. Li foil was used as anode and 1M of LiTFSI (lithium bis-trifluoromethanesulfonimide, MTI) in a 1:1 mixture of DOL (Dioxolane, Aldrich) and TTE (1,1,2,2-Tetrafluoroethyl 2,2,3,3-Tetrafluoropropyl Ether, TCI) was used as electrolyte. Before testing the device, conditioning of the electrode materials was performed as follows: Rest the electrode until it reaches voltage equilibrium (usually ~6 hours) and hold of potential for 3 hours at 1.5 V.

The stability testing of this material shows good results in low current density. The initial capacity was 686 mA $g^{-1}$ at 0.2 C (0.33 A $g^{-1}$) and the cell maintained very high stability even this rate showing 784 mAh $g^{-1}$ after 100 cycles (Fig. 15). This value corresponds to 705 mAh $g^{-1}$ with respect to the active material (90%), and 522 mAh $g^{-1}$ with respect to the whole electrode mass (GPS, 74% sulfur) after 100 cycles at 0.2 C (0.33 A $g^{-1}$). The coulombic efficiency is kept at 96% for 100 cycles corresponding to very low material loss during the cycling. These values are very close with the value of Example 7, which delivers 761 mAh $g^{-1}$ after 100 cycles (Fig. 13b) corresponding to 685 mAh $g^{-1}$ with respect to the active material (90% active), and 547 mAh $g^{-1}$ with respect to the whole electrode mass (GPS 1:8, 80% sulfur) after 100 cycles at 0.2 C (0.33 A $g^{-1}$). The similarity of the results was expected because all the parameters except the FG:PS mass ratio were kept the same. Overall, the GPS 1:8 material performs slightly better because of its higher sulfur mass loading.

**Claims**

1. A method for preparation of sulfur-functionalized graphene which contains the following steps:

   a) providing a dispersion of fluorinated graphite;
   b) subjecting the dispersion of fluorinated graphite to sonication and/or mechanical treatment and/or thermal treatment;
   c) preparing a metal polysulfide, starting from a metal sulfide and sulfur;
   d) contacting the product from step b) with the product of step c) at a temperature within the range of 10-110°C;
   e) separating the solid product formed in step d) from the solution.

2. The method according to claim 1, wherein the dispersion prepared in step a) is a dispersion of fluorinated graphite in an aprotic polar solvent, optionally in combination with a non-polar solvent.

3. The method according to claim 1 or 2, wherein in step a), the dispersion is subjected to mechanical treatment followed by sonication, wherein the mechanical treatment is selected from high-shear mixing, stirring, vigorous stirring, stirring with magnetic bar, stirring with a mechanical stirrer.

4. The method according to any one of the preceding claims, wherein the metal in the polysulfide and sulfide in step c) is an alkali metal or an alkaline earth metal; more preferably, the metal is selected from sodium, potassium and magnesium.

5. The method according to any one of the preceding claims, wherein after contacting the product of step b) with the metal polysulfide reagent, the mixture is subjected to heating to a temperature within the range of 10-110 °C for at least 4 hours, preferably for at least 2 days.

6. The method according to any one of the preceding claims, wherein the weight ratio of the starting fluorinated graphite to the metal polysulfide is in the range of 1:2 to 1:20, more preferably 1:2 to 1:10.

7. Sulfur-functionalized graphene, containing graphene with covalently bound sulfur and having a sulfur loading of at least 60 wt. %, preferably of at least 70 wt. % wherein the sulfur loading is determined by thermogravimetric analysis by measuring the weight loss in the temperature range of 200-350 °C.

8. Sulfur-functionalized graphene according to claim 7 wherein the covalently bound sulfur is in the form of S atoms and polysulfide chains covalently bonded on the graphene surface.

9. Use of the sulfur functionalized graphene according to claim 7 or 8 as a cathode material in lithium sulfur batteries.

10. An electrical cell comprising at least two electrodes, a separator and an electrolyte, wherein one electrode contains or consists of the sulfur functionalized graphene described above.

**FIG. 1**

**FIG. 2**

**FIG. 3**

**FIG. 4**

**FIG. 5**

FIG. 6

FIG. 7

FIG. 8

FIG. 9

FIG. 10

FIG. 11

FIG. 12

FIG. 13

FIG. 14

FIG. 15

Europäisches
Patentamt

European
Patent Office

Office européen
des brevets

# EUROPEAN SEARCH REPORT

Application Number

EP 20 19 9904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | URBANOVÁ VERONIKA ET AL: "Thiofluorographene-Hydrophilic Graphene Derivative with Semiconducting and Genosensing Properties", ADVANCED MATERIALS, vol. 27, no. 14, 1 April 2015 (2015-04-01), pages 2305-2310, XP055786674, ISSN: 0935-9648, DOI: 10.1002/adma.201500094 * abstract * * figure 1 * | 1-6 | INV. C01B32/19 C01B32/194 H01M10/052 |
| A | CHRONOPOULOS DEMETRIOS D. ET AL: "Tunable one-step double functionalization of graphene based on fluorographene chemistry", CHEMICAL COMMUNICATIONS, vol. 56, no. 13, 1 January 2020 (2020-01-01), pages 1936-1939, XP055786683, ISSN: 1359-7345, DOI: 10.1039/C9CC09514D Retrieved from the Internet: URL:https://pubs.rsc.org/en/content/articl epdf/2020/cc/c9cc09514d> [retrieved on 2021-03-17] * abstract * * figure 1 * * page 1937 * | 1-6 | |
| | -/-- | | TECHNICAL FIELDS SEARCHED (IPC) C01B H01M |

The present search report has been drawn up for all claims

| Place of search | Date of completion of the search | Examiner |
|---|---|---|
| The Hague | 18 March 2021 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

Application Number

EP 20 19 9904

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHRONOPOULOS DEMETRIOS D. ET AL: "Chemistry, properties, and applications of fluorographene", APPLIED MATERIALS TODAY, vol. 9, 1 December 2017 (2017-12-01), pages 60-70, XP055786693, NL ISSN: 2352-9407, DOI: 10.1016/j.apmt.2017.05.004 * abstract * * figures 1,3 * | 1-6 | |
| X | YOO SUYEON ET AL: "Well-dispersed sulfur wrapped in reduced graphene oxide nanoscroll as cathode material for lithium-sulfur battery", JOURNAL OF ELECTROANALYTICAL CHEMISTRY, ELSEVIER, AMSTERDAM, NL, vol. 780, 1 September 2016 (2016-09-01), pages 19-25, XP029780100, ISSN: 1572-6657, DOI: 10.1016/J.JELECHEM.2016.08.040 | 7,9,10 | |
| A | * abstract * * paragraph [02.3] * * figure 1 * | 8 | |
| X | US 2014/255795 A1 (MANTHIRAM ARUMUGAM [US] ET AL) 11 September 2014 (2014-09-11) | 7,9,10 | |
| A | * abstract * * figures 1, 12 * * example 1 * * paragraphs [0070], [0083], [0084] * | 8 | |
| X | US 2017/271660 A1 (FEI LINFENG [CN] ET AL) 21 September 2017 (2017-09-21) | 7,9,10 | |
| A | * figure 1C * * paragraphs [0057], [0062], [0064], [0073]; example 3 * | 8 | |

-/--

The present search report has been drawn up for all claims

| Place of search | Date of completion of the search | Examiner |
|---|---|---|
| The Hague | 18 March 2021 | Mertins, Frédéric |

TECHNICAL FIELDS
SEARCHED (IPC)

EPO FORM 1503 03.82 (P04C01)

page 2 of 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/386347 A1 (ZHAMU ARUNA [US] ET AL) 19 December 2019 (2019-12-19) | 7,9,10 | |
| A | * abstract * <br> * paragraph [0110] * <br> ----- | 8 | |

TECHNICAL FIELDS
SEARCHED      (IPC)

The present search report has been drawn up for all claims

| Place of search | Date of completion of the search | Examiner |
|---|---|---|
| The Hague | 18 March 2021 | Mertins, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 9904

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2021

| Patent document cited in search report | Publication date | Patent family member(s) | Publication date |
|---|---|---|---|
| US 2014255795 A1 | 11-09-2014 | US 2014255795 A1<br>US 2016336590 A1<br>WO 2014164494 A1 | 11-09-2014<br>17-11-2016<br>09-10-2014 |
| US 2017271660 A1 | 21-09-2017 | NONE | |
| US 2019386347 A1 | 19-12-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. L. JI et al.** *Nat. Mater.,* 2009, vol. 8, 500-506

- **V. URBANOVÁ et al.** *Adv. Mater.,* 2015, vol. 27, 2305-2310